Europäisches Patentamt

European Patent Office

Office européen des brevets

(19)

(11) Veröffentlichungsnummer: **0 273 330**
**B1**

(12)

# EUROPÄISCHE PATENTSCHRIFT

(45) Veröffentlichungstag der Patentschrift:
**14.03.90**

(51) Int. Cl.⁴: **G11B 5/72,** G11B 5/71

(21) Anmeldenummer: **87118900.7**

(22) Anmeldetag: **19.12.87**

(54) **Magnetische Aufzeichnungsträger.**

(30) Priorität: **31.12.86 DE 3644823**

(43) Veröffentlichungstag der Anmeldung:
**06.07.88 Patentblatt 88/27**

(45) Bekanntmachung des Hinweises auf die Patenterteilung:
**14.03.90 Patentblatt 90/11**

(84) Benannte Vertragsstaaten:
**DE FR GB NL**

(56) Entgegenhaltungen:
EP-A- 0 194 675
US-A- 4 411 963
US-A- 4 524 106
US-E- 32 464

**Patent Abstracts of Japan, unexamined applications,
Sektion P, Band 7, Nr. 290, 24. Dezember 1983 The
Patent Office Japanese Government Seite 130 P 245
Patent Abstracts of Japan, unexamined applications,
Sektion C, Band 9, Nr. 254, 11. Oktober 1985 The Patent
Office Japanese Government Seite 65 C 308
Patent Abstracts of Japan, unexamined applications,
Sektion P, Band 7, Nr. 38, 16. Februar 1983 The Patent
Office Japanese Government Seite 36 P 176**

(73) Patentinhaber: **BASF Aktiengesellschaft,
Carl-Bosch-Strasse 38, D-6700 Ludwigshafen(DE)**

(72) Erfinder: **Hitzfeld, Michael, Dr., Kalkerdestrasse 20,
D-6718 Gruenstadt(DE)**
Erfinder: **Grau, Werner, Dr., Tuchbleiche 5,
D-6712 Bobenheim-Roxheim(DE)**
Erfinder: **Hack, Joachim, Pfarrer-Friedrich-Strasse 34,
D-6700 Lidwigshafen(DE)**

## Beschreibung

Die Erfindung betrifft magnetische Aufzeichnungsträger, bestehend aus einem flexiblen scheibenförmigen unmagnetischen Trägermaterial, einer darauf aufgebrachten für Vertikalaufzeichnung geeigneten Kobalt/Chrom-Legierungsschicht und einer auf dieser Legierungsschicht befindlichen reibungsmindernden Schicht sowie ein Verfahren zu ihrer Herstellung.

Die seit langem gebräuchliche magnetische Aufzeichnungstechnik beruht auf der Erzeugung unterschiedlich magnetisierter Bereiche in einer magnetisierbaren Schicht und deren Speicherung durch die anschließend nach dem Abklingen des Aufzeichnungsfeldes verbleibende Restmagnetisierung. Bei den bekannten magnetischen Aufzeichnungsträgern sowohl mit Magnetschichten vom Pigment/Bindemitteltyp als auch bei homogenen Metallschichten ist die magnetische Vorzugsrichtung der informationstragende Magnetisierung in der Schichtebene. Diese longitudinale Aufzeichnungsverfahren hat jedoch den Nachteil, daß bei einer extremen Steigerung der Aufzeichnungsdichte durch die gegenseitige Beeinflussung der magnetisierten Bereiche Entmagnetisierungsverluste auftreten, die auch bis zur technisch möglichen Verringerung der Magnetschichtdicke nicht ausreichend begrenzt werden können.

Es wurde deshalb bereits vorgeschlagen (S. Iwasaki et al, IEEE Trans. Mag., Vol. MAG-13, No. 5, Seiten 1272-1277, 1977) die Magnetisierungsrichtung der Magnetschicht vertikal auszurichten. Bei der vertikalen Datenspeicherung liegt der Vorteil in einer geringeren gegenseitigen Beeinflussung der magnetischen Bereiche, so daß die Magnetisierungsbereiche, d.h. die Bitgröße, stark reduziert werden kann. Besonders bei flexiblen Aufzeichnungsplatten ist auf diese Weise eine äußerst aussichtsreiche Steigerung der Aufzeichnungsdichte zu erwarten. Diese Aufzeichnungsträger werden durch Abscheidung einer Kobalt/Chrom-Legierung mit einem Chromgehalt von 15 bis 25 Atom-% im Vakuum hergestellt. Dabei bewirkt ein säulenförmiges Wachstum der Legierungsschicht, daß die Säulen mit hexagonaler Kristallstruktur und einem mittleren Durchmesser von 100 nm gegenseitig magnetisch entkoppelt sind und daß die starke Kristallanisotropie eine Magnetisierung vertikal zur Metallschichtoberfläche zuläßt.

Diese Aufzeichnungsträger lassen sich sowohl mit magnetischen Ringköpfen als auch mit speziellen Einpolköpfen betreiben. Um die gesamte Speicherkapazität solcher Aufzeichnungsträger ausnützen zu können, müssen sie ebenso wie bei den üblichen flexiblen Aufzeichnungsplatten im Kontaktverfahren benutzt werden. Dies hat jedoch gerade bei der dünnen metallischen Kobalt/Chrom-Schicht einen sehr schnellen Verschleiß zur Folge. Zur Erhöhung der Lebensdauer dieser Speichermedien wurde schon das Aufbringen flüssiger Oligomere auf die Schichtoberfläche vorgeschlagen (Buttafava et al., IEEE Trans. Magn. Vol. MAG-21, No. 5, Seite 1533, 1985). Solche Öle haften jedoch sehr schlecht auf Metalloberflächen und zudem ist die Dosierung sehr kritisch, da zu dicke Schichten zu Sticking und zum Kopfverschmieren führen. Auch die Härtung der Metalloberfläche durch eine partielle Oxidation der Grenzschicht, über die Y. Nakatsuka et al. auf der Intermag Conference 1986 in Phoenix berichtete, birgt Schwierigkeiten, da die oxidische Schicht einen zu hohen Reibungskoeffizienten verursacht. Eine weitere Möglichkeit zur Härtung der Magnetschicht auf Basis Kobalt/Chrom ist in J. Appl. Phys. 57, 4019 (1985) beschrieben. Danach soll durch eine Zulegierung von Zirkon und Tantal zur metallischen Magnetschicht die mechanische Stabilität der Schicht verbessert werden. Bei diesem Vorgehen werden jedoch die magnetischen Kennwerte der Schicht nachteilig beeinflußt.

Aufgabe der Erfindung war es daher, magnetische Aufzeichnungsträger bereitzustellen, welche auf einem flexiblen scheibenförmigen unmagnetischen Trägermaterial eine für Vertikalaufzeichnung geeignete Kobalt/Chrom-Legierungsschicht sowie eine auf dieser Legierungsschicht befindlichen reibungsmindernden Schicht aufweisen und bei denen die angegebenen Nachteile nicht auftreten und welche sich insbesondere durch eine hohe Lebensdauer auszeichnen. Außerdem war es Aufgabe der Erfindung, Verfahren zur Herstellung dieser magnetischen Aufzeichnungsträger anzugeben.

Es wurde nun gefunden, daß sich die gestellte Aufgabe lösen läßt, wenn die reibungsmindernde Schicht eine durch Sputtern erzeugte amorphe Kohlenstoffschicht mit einer Schichtdicke von 5 bis 100 nm ist.

Gegenstand der Erfindung ist des weiteren ein Verfahren zur Herstellung dieser speziellen magnetischen Aufzeichnungsträger. Hierzu wird die amorphe Kohlenstoffschicht mittels eines DC-Magnetron-Sputterprozesses erzeugt, wobei es besonders zweckmäßig ist, daß bei dieser Art des Aufbringens ein RKP-Wert zwischen 1 und 10, bevorzugt zwischen 2 und 5 eingehalten wird. Der RKP-Wert ist definiert durch das Produkt aus Argonsputterdruck, in Pascal, und der spezifischen Sputterleistung, in Watt pro cm$^2$, wobei sich die spezifische Sputterleistung aus der angelegten elektrischen Leistung am Target in Watt zu der Targetgesamtoberfläche in cm$^2$ ergibt. Bei einem RKP-Wert zwischen 1 und 10 ergeben sich amorphe Kohlenstoffschichten, die optimale Gleit- und Reibungseigenschaften besitzen.

Scheibenförmige magnetische Aufzeichnungsträger mit einer für eine Vertikalaufzeichnung geeigneten Kobalt/Chrom-Legierungsschicht sind bekannt. Sie werden mittels DC-Magnetron-Sputtern hergestellt. Dieses Verfahren ist bekannt und beispielsweise in Thin Film Processes, Academic Press, Vossen, John L. and Kern, Werner 1978, Seiten 131-173 beschrieben.Hierbei ergeben sich die Vorteile der Sputtertechnik zusammen mit einer maximalen Schichtwachstumsgeschwindigkeit. Innerhalb einer Vakuumkammer befinden sich Kathode und Anode. Die Anode wird durch das Substrat gebildet. Die Kathode ist mit einer dicken Scheibe aus der gewünschten CoCr-Legierung, dem Target beklebt. Durch das regelbare Argoneinlaßventil strömt das Sputtergas in die Vakuumkammer bis der gewünschte Sputterdruck eingestellt ist. Das Argongas wird nun mit Elektronen aus einem Glühfaden ionisiert. Mit seiner positiven Ladung wird das Argonion auf das negativ gepolte Target beschleunigt und zerstäubt dort mit seiner kinetischen Energie an der Oberfläche neutrale Targetatome, die sich als gesputterte Teilchen auf dem Substrat abscheiden. Dieser einmal gezündete Vorgang wird durch die physikalischen Prozesse innerhalb des Argonplasmas selbst aufrechterhalten.

Mit einem solchen Prozeß wird beispielsweise eine 75 μm dicke Polyimidfolie als Substrat auf beiden Seiten mit 380 nm $Co_{80}Cr_{20}$ bei 170°C besputtert. Zuvor wird die Folie geglimmt. Der Auftrag der Magnetschicht erfolgt im DC-Magnetron Verfahren. Der Argonsputterdruck beträgt dabei 266,644 mPa ($2 \times 10^{-3}$ Torr). Wichtig ist dabei das Basisvakuum von 26,6 μPA ($2 \times 10^{-7}$ Torr) vor Prozeßbeginn. Hervorragende magnetische und kristallographische Eigenschaften werden mit solchen Herstellungsparametern erzielt. Typisch sind folgende Daten:

$H_c$    55,7 kA/m   (700 Oe) Koerzitivfeldstärke

$H_k$  286,5 kA/m (3600 Oe) Anisotropiefeldstärke

$M_s$                  650 mT   Sättigungsmagnetisierung

Theta          3,5 Grad   Breite des kristallographischen (002)-Kobaltreflexes.

Derartige Aufzeichnungsträger werden nun erfindungsgemäß mit einer amorphen Kohlenstoffschicht beaufschlagt. Dazu wird die mit der Kobalt/Chrom-Schicht versehene flexible Substratfolie zweckmäßigerweise unmittelbar im Anschluß daran im gleichen Gerät weiterbearbeitet. Als Target wird lediglich graphitischer Kohlenstoff eingesetzt. Die Targetleistungsdichte beträgt hierbei 1 bis 10 Watt/cm² und der Argonsputterdruck 0,2 bis 1,5 Pascal. Mit Hilfe des erfindungsgemäßen Verfahrens werden entsprechende magnetische Aufzeichnungsträger erhalten, die eine verbesserte Lebensdauer im üblichen Betrieb zeigen.

Bei der Durchführung dieses erfindungsgemäßen Verfahrens hat es sich als zweckmäßig herausgestellt, daß der RKP-Wert zwischen 1 und 10, bevorzugt zwischen 2 und 5 beträgt. Der RKP-Wert ist definiert als das Produkt aus Sputterdruck, beispielsweise dem Argon-Partialdruck, in Pascal und der spezifischen Sputterleistung in Watt pro cm², wobei sich die spezifische Sputterleistung aus der angelegten elektrischen Leistung am Target in Watt zu der Target-Gesamtfläche in cm² ergibt.

So zeigen beispielsweise flexible Aufzeichnungsplatten mit einem Durchmesser von 13,3 cm (5,25 Zoll), welche auf einer Polyimidfolie als Magnetschicht beidseitig eine 350 nm dicke Kobalt/Chromschicht aufweisen, im Standardbetrieb bei 300 Upmin mit einem FD-Magnetkopf unter einem Kopfandruck von 18 p einen mit Hilfe von Dehnungsmeßstreifen gemessenen Reibungskoeffizienten von 0,27 bis 0,32 auf. Allerdings muß nach einer Laufzeit von 7 Minuten der Test wegen Beschädigung der Magnetschicht abgebrochen werden. Wird dagegen mit der gleichen Versuchsanordnung eine ebensolche Aufzeichnungsplatte, welche jedoch auf der Magnetschicht eine 40 nm dicke amorphe Kohlenstoffschicht aufweist, geprüft, so beträgt der Reibungskoeffizient zu Beginn 0,11 um bei 0,22 seinen Sättigungswert zu erreichen. Außerdem kann nach 60 Minuten der Test ohne jegliche Beschädigung der Magnetschicht beendet werden.

Auch im beschleunigten Lebensdauersimulationstest ergeben sich bei den Aufzeichnungsträgern mit der Kohlenstoffschicht herausragende Ergebnisse. Dabei wird eine Aufzeichnungsplatte auf einem konventionellen Laufwerk bei 100 Upmin betrieben und als Magnetkopfdummy ein AlTiC-Pin mit 25 mm Radius unter einem Anpreßdruck von 40 p auf die Magnetschicht gedrückt. Während eine Kobalt/Chromschicht ohne Kohlenstoffschicht bereits nach 6 Sekunden bis auf die Trägerfolie abgerieben ist, läßt sich bei einer solchen Platte mit Kohlenstoffschicht nach 1500 Sekunden der Test ohne Beschädigung der Magnetschicht beenden.

## Patentansprüche

1. Magnetische Aufzeichnungsträger, bestehend aus einem flexiblen scheibenförmigen unmagnetischen Trägermaterial, einer darauf aufgebrachten für Vertikalaufzeichnung geeigneten Kobalt/Chrom-Legierungsschicht und einer auf dieser Legierungsschicht befindlichen reibungsmindernden Schicht, dadurch gekennzeichnet, daß die reibungsmindernde Schicht eine durch Sputtern erzeugte amorphe Kohlenstoffschicht mit einer Schichtdicke von 5 bis 100 nm ist.

2. Verfahren zur Herstellung magnetischer Aufzeichnungsträger, bestehend aus einem flexiblen scheibenförmigen unmagnetischen Trägermaterial, einer darauf aufgebrachten für Vertikalaufzeichnung geeigneten Kobalt/Chrom-Legierungsschicht und einer auf dieser Legierungsschicht befindlichen reibungsmindernden Schicht, dadurch gekennzeichnet, daß als reibungsmindernde Schicht eine mittels eines DC-Magnetron-Sputterprozesses erzeugten amorphe Kohlenstoffschicht mit einer Schichtdicke von 5 bis 100 nm aufgebracht wird.

3. Verfahren gemäß Anspruch 2, dadurch gekennzeichnet, daß der DC-Magnetron-Sputterprozeß bei einem RKP-Wert von 1 bis 10 durchgeführt wird.

## Claims

1. A magnetic recording medium consisting of a flexible disk-shaped nonmagnetic base, a cobalt/chromium alloy layer applied thereto snd suitable for vertical recording, and a friction-reducing layer present on this alloy layer, wherein the friction-reducing layer is a 5–100 nm thick amorphous carbon layer produced by sputtering.

2. A process for the production of a magnetic recording medium consisting of a flexible disk-shaped nonmagnetic base, a cobalt/chromium alloy layer applied thereto and suitable for vertical recording, and a frictionreducing layer present on this alloy layer, wherein a 5–100 nm thick amorphous carbon layer produced by a DC magnetron sputter process is applied as the frictionreducing layer.

3. A process as claimed in claim 2, wherein the DC magnetron sputter process is carried out at an RKP value of from 1 to 10.

## Revendications

1. Support d'enregistrement magnétique, constitué d'un matériau support non magnétique, en forme de disque flexible, d'une couche d'alliage cobalt-chrome, convenant pour l'enregistrement vertical, appliquée sur le matériau support et d'une couche atténuant le frottement se trouvant sur cette couche d'alliage, caractérisé par le fait que la couche atténuant le frottement est une couche de carbone amorphe produite par pulvérisation et d'une épaisseur de 5 à 100 nm,

2. Procédé de fabrication d'un support d'enregistrement magnétique, constitué d'un matériau support non magnétique, en forme de disque flexible, d'une couche d'alliage d'cobattchrome, convenant pour l'enregistrement vertical, appliquée sur le matériau support et d'une couche atténuant le frottement se trouvant sur cette couche d'alliage, caractérisé par le fait que, comme couche atténuant le frottement, est appliquée, une couche de carbone amorphe produite an moyen d'un processus de pulvérisation à magnetron DC et à une épaisseur de 5 à 100 nm,

3. Procédé selon la revendication 2, caractérisé par le fait que le processus de pulvérisation à magnetron DC est mis en œuvre avec une valeur RKP de 1 à 10.